# EUROPEAN PATENT SPECIFICATION

(11) **EP 0 598 722 B1**
(45) Date of publication and mention of the grant of the patent: **07.02.1996**
(21) Application number: 92900232.7
(22) Date of filing: 05.12.1991
(51) Int. Cl.: B60R 22/20

(54) **HEIGHT-ADJUSTABLE SEATBELT**
HÖHENVERSTELLBARER SICHERHEITSGURT
CEINTURE DE SECURITE A HAUTEUR REGLABLE

(30) Priority: 06.12.1990 SE 9003883
(43) Date of publication of application: 01.06.1994
(73) Proprietor: AB VOLVO, S-405 08 Göteborg (SE)
(72) Inventor: PILHALL, Stig, S-461 53 (SE)
(74) Representative: Kristiansen, Alf P.
(86) International application number: SE9100844
(87) International publication number: WO9210385

(56) References cited:
- DE-A- 3 530 495
- DE-A- 3 815 629
- DE-A- 3 815 631
- DE-A- 3 843 308

## Description

### TECHNICAL FIELD:

The present invention relates to a height-adjustment arrangement for safety belts in vehicles, primarily for safety belts intended for rear seat passengers, whereby the safety belt is of the retractable, reel-type and the reel is affixed to the vehicle body, said height-adjustment arrangement comprising a longitudinally extending guide member mounted to the body at a passenger's shoulder-height, the length of which guide member considerably exceeds the width of said safety belt and which member at least partially presents a guide surface continuously curved in the longitudinal extension and intended for contact with a portion of the safety belt which is between said reel and the length intended to extend over the shoulder and chest, and which portion runs directly from the reel to said guide member which simultaneously permits height-adjustment of the belt on the guide member.

### BACKGROUND OF THE INVENTION:

Height-adjustment arrangements of the above-mentioned type are previously known. A height-adjustment arrangement is known from i.a. DE-A-3 815 629 for safety belts in vehicles, primarily for safety belts intended for rear seat passengers, whereby the safety belt is of the retractable, reel-type and the reel is affixed to the body, said height-adjustment arrangement comprising a longitudinally extending guide member mounted to the body at a passenger's shoulder-height, the length of which guide member considerably exceeds the width of said safety belt and which member in a transverse section at least partially presents a continuously curved outer surface intended for contact between a portion of the safety belt which is between said reel and the length of the safety belt which is intended to extend over the shoulder and chest (see also DE-A-3 815 631).

The previously known height-adjustment arrangements suffer from the disadvantage that the height-adjustment arrangement must be complemented with a guide member which is located a certain distance from the actual height-adjustment arrangement, which in turn requires a very wide D-post. A wide D-post brings with it i.a. the drawback that it eliminates or at least complicates the fitting of a small side window.

An arrangement is known from DE-A1-3 530 495 which has a common member for height-adjustment and guiding. This arrangement is particularly intended for front seats and has a belt geometry which does not offer satisfactory self-adjustment of the height position.

Another arrangement is disclosed in DE-A-38 43 308 which discloses the features mentioned in the pre-characterising clause of claim 1.

The object of the present invention is primarily to provide a belt for rear seat use with which high-grade self-adjustment of the height position of the upper mounting point is achieved.

### SOLUTION:

Said object is achieved with an arrangement as defined in claim 1.

Further advantages and objects of the invention will become apparent from the claims and following description.

### BRIEF DESCRIPTION OF THE DRAWINGS:

The invention will be described in greater detail in the following with reference to the attached drawings in which;
- Fig. 1: shows a partial section through a vehicle in which a preferred arrangement according to the invention is mounted,
- Fig. 2: shows a longitudinal cross-section of a member according to the invention shown in Fig. 1,
- Fig. 3: shows a transverse cross-section through the member of Fig. 2,
- Fig. 4: shows an alternative embodiment of a member according to the invention, and
- Fig. 5: shows a further modified embodiment of a member according to the invention.

### BEST MODE OF CARRYING OUT THE INVENTION:

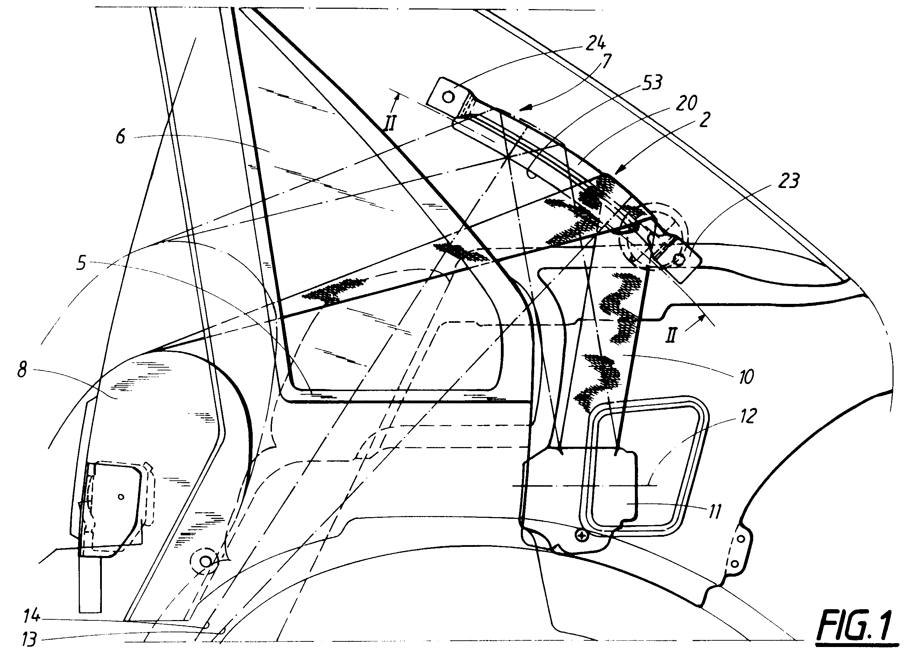

Fig. 1 shows a part of a vehicle comprising the upper region of the rear seat back-rest 5, a small side window 6 and a D-post 7. A guide member 2 is affixed to the inside of the D-post 7. A safety belt 10 runs over the guide member 2. The safety belt extends from a belt reel 11 which is mounted to the body 3 by screw means 4. The belt reel 11 is mounted substantially horizontally which implies that the centre axis 12 of the reel extends horizontally. The safety belt 10 runs from the guide member 2 over the rear seat back-rest 5 to the shoulder 8 of an imaginary passenger. The guide member 2, which also acts at the same time as a height-adjuster, consists of a longitudinally extending circular rod having an outer surface 20 which is circularly curved in cross section and which has a slight positive longitudinal curvature. The rod 2 is attached to the D-post at its respective ends 23, 24 by screw means or similar.

In the situation depicted by solid lines the safety belt has been adjusted for the shoulder position of a relatively short person (5% female). The belt 10 hereby runs as far down towards the lower end of the mounting 23 as possible. In the situation shown in dashed lines the safety belt 10 has been adapted to a relatively tall person (95% male) and the belt is here in its upper position and thus as close to the upper mounting point 24 as possible.

In order to attain such self-adjustment, the guide member should be shaped in a certain way. In the preferred instance, this means that, as mentioned previously, said outer surface 20 is also curved along its longitudinal extension and that the curvature is positive so that a convex surface is formed. Said curvature in the longitudinal direction in this preferred case follows the arc of a circle with a radius of curvature of circa 600 mm. This radius of curvature is pre-calculated to be the distance between said surface and the point of intersection of two lines 13,14, whereby each of said lines corresponds to the normal to said outer surface 20 at respective extreme positions of the safety belt 10 on the guide member 2. These lines 13,14 extend from the guide point for the safety belt 10. The result of the guiding of the belt 10 is determined by the optical laws of reflection, i.e. in each height position the angle of approach that the belt makes to the rod's normal is equal to the angle to the normal which the belt forms when leaving the rod. A limiting factor has been that the length of the safety belt 10 which is between the reel 11 and the guide member 2 may not be allowed to "swing" too much in order to avoid any possible malfunction, i.e. the angle between the direction of emergence of the safety belt 10, seen from the reel 11, in the two extreme positions may not exceed a certain given angle. In the preferred case, this angle has been set at 20°. Accordingly, the upper bisectrix 14 represents a mid-line shown in the plane of the paper in Fig. 1 between (as seen from the guide point) incoming and exiting regions of the safety belt 10 when the belt is in an upper extreme position, i.e. for a very tall person (95% male), and the lower bisectrix 13 represents a mid-line shown in the plane of the paper in Fig. 1 between (as seen from the guide point) incoming and exiting regions of the safety belt 10 when the belt is in a lower extreme position, i.e. for a very short person (5% female).

In order to achieve good height adjustment in accordance with the invention, in the shown example the guide member 2 is mounted so as to create a relatively sharp acute angle with respect to the horizontal line. In the preferred illustrated case this angle is circa 40° for a line which is drawn between the two mounting points 23, 24. It is advantageous if the distance between the guide member 2 and the belt reel 11 is relatively large, in the preferred case 200 mm from the centre of the reel to the lower region of the guide surface 20. Accordingly, it is advantageous if the reel is mounted as low as possible above the wheel-arch so that the sidewards movement of the belt, in accordance with the above, will not be too great. Such a sidewards movement in the preferred shown example may amount to +-10°, though no more than 30° max. An advantage of mounting the reel axis horizontally is that no adaptation for left and right side fitting is required.

In the shown preferred example the active surface 20 of the rod 2 is positively curved, which means that a larger range is obtained than if the rod were straight or even had a negatively curved surface 20. A condition for the invention to work is that the friction between the belt and the outer surface 20 of the rod 2 is not too great. A fairly well polished steel surface has been shown to work well.

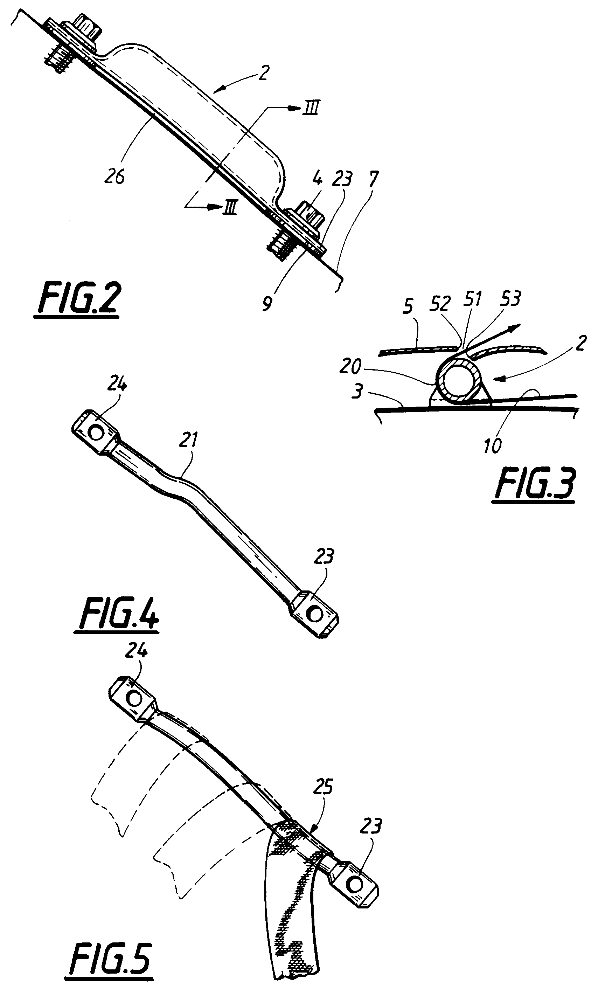

A longitudinal view of the invention is shown in Fig. 2 in which the rod 2 consists of a hollow tube which is flattened at its ends 23 at which it is affixed to sheet sections 7 of the D-post by screw means 4. In order to maintain a desired gap width (optimum circa 2-2.5 mm, preferably 1.5-2.5 mm) in the gap 26 between the guide member 2 and the locating section 7, spacers 9 of a thickness corresponding to the gap width are used, provided that the under surface of the guide member is straight. A transverse cross-section is shown in Fig. 3 and also illustrates the tubular form of the guide member 2. As can additionally be seen from this latter figure, the active surface 20 of the member 2 is less than a semi-circle since it consists only of that region in which contact can arise between the safety belt 10 and the outer surface 20 of the rod. A covering partition wall 5 is provided above the rod 2 through which the safety belt exits from an opening 51. To achieve a gentle transition this opening is arranged with a lower edge 55 which is slightly inwardly curved towards the centre of the rod 2. The partition wall is made from a relatively shape-stable material so that there is no risk that the rod itself will be a safety hazard for the vehicle's passengers.

An alternative embodiment of the rod according to the invention is shown in Fig. 4. The rod is hereby formed with a discontinuity 21 in proximity to, though above, its middle, so that an increased retention of the belt in the upper position is achieved. The discontinuity has been achieved by bending the rod 2 in two places so that a "step" is formed. A further modification is shown in Fig. 5 in which the rod 2 is provided with a positive curvature 25 close to its lower mounting point 23. This positive curvature in the lower region allows careful adjustment of the belt if the geometry of the vehicle is such that the retracting position for the belt is relatively upright.

The invention is not restricted to that which has been shown, but can be varied within the scope of the appended claims. Accordingly it is possible that for example, instead of for a rod, a U-shaped pressed plate may be used, or some kind of preferably fibre-reinforced polymer material. Even if a preferred optimal location of the reel and guide respectively gives the guide rod a slope of around 40°-45°, it is to be understood that the invention will also work with deviations from this angle. The distance between the reel 11 and the lower region of the outer active surface 20 can be varied within the previously given range, i.e. +- 30° approx., though the reel should preferably be located as far from the guide member 2 as possible and at least 150 mm, preferably greater than 250 mm. The longitudinal extention of the member 2 is dependent on the angle of slope and the lower the angle, the longer the rod needs to be (provided that the reel remains stationary). In the preferred case the longitudinal extention of the active surface is circa 180-200 mm at an angle of 40°. The longitudinal extention should at least exceed 150 mm. This extention can accordingly also be varied with respect to the slope in a manner which is apparent to the skilled person. The radius of curvature for said curvature should be less than 3000 mm, preferably within the range 400 - 1000 mm and in the shown case 600 mm +- 10%.

## Claims

1. Height-adjustment arrangement for safety belts in vehicles, primarily for safety belts intended for rear seat passengers, whereby the safety belt (10) is of the retractable, reel-type and the reel (11) is affixed to the vehicle body (3), said height-adjustment arrangement (2) comprising a longitudinal between a low (23) and a high fitting point (24) extending guide member (2) mounted to the body at a passenger's shoulder-height, the length of which guide member considerably exceeds the width of said safety belt and which member (2) at least partially presents a guide surface (20) continuously curved in the longitudinal extension and intended for contact with a portion of the safety belt which is between said reel (11) and the length intended to extend over the shoulder and chest, and which portion runs directly from the reel (11) to said guide member (2) which simultaneously permits height-adjustment of the belt on the guide member, said guide surface (20) is positively curved for the majority of its length along its longitudinal extension so that a convex surface is formed along its length, said guide member having a substantially longitudinal extension which forms an acute angle with respect to the horizontal plane, which angle preferably is equal to, or less than, 45° (α≦45°), said reel (11) being mounted substantially horizontally,
**characterized by** the combination that said reel (11) extends with its reel axis in the longitudinal direction of the vehicle and that said high fitting point (24) is positioned forwardly of the low fitting point (23), as seen in the longitudinal direction of the vehicle.

2. Height-adjustment arrangement according to claim 1,
**characterized in** that said longitudinal curvature substantially follows a line corresponding to a radius of curvature which is less than 3000 mm, preferably in the range 1000-400 mm and most preferably 600 mm +-10%, which latter radius of curvature is suitably subtended by the intersection point between two bisectrices to the seat belt angles in respective extreme positions on said outer surface (20).

3. Height-adjustment arrangement according to claim 1,
**characterized in** that the distance between the central axis (12) of the reel (11) and the nearest point on said outer surface (20) at least exceeds 150 mm, though preferably exceeds 200 mm and most preferably exceeds 250 mm.

4. Height-adjustment arrangement according to claim 1,
**characterized in** that said outer surface (20) has a substantially longitudinal extension which exceeds 150 mm, though preferably exceeds 200 mm.

5. Height-adjustment arrangement according to claim 2,
**characterized in** that the extension of the member (2) is such that the safety belt, as it unwinds from the reel (11), is allowed to swing a maximum of 30° between the two end positions on said member (2), though preferably 20°.

6. Height-adjustment arrangement according to claim 1,
**characterized in** that a gap (26) between the guide (2) and a sheet section (7) is achieved by means of spacers (9) of desired thickness which give a gap width preferably between 1.5 and 2.5 mm.

## Patentansprüche

1. Höhenverstellanordnung für Sicherheitsgurte in Fahrzeugen, insbesondere für Sicherheitsgurte, die für Rücksitzpassagiere vorgesehen sind, wobei der Sicherheitsgurt (10) zurückziehbar ist und eine Rolle (11) aufweist, welche an der Fahrzeugkarosserie (3) befestigt ist, wobei die Höhenverstellanordnung (2) ein longitudinales, sich zwischen einer unteren (23) und einer oberen Befestigungsstelle (24) erstreckendes Führungsteil (2) besitzt, das an der Karosserie in der Höhe der Schulter eines Passagiers montiert ist, wobei die Länge des Führungsteils erheblich die Breite des Sicherheitsgurtes übersteigt und wobei das Teil (2) wenigstens teilweise eine Führungsfläche (20) aufweist, die kontinuierlich in der Längserstreckung gekrümmt ist und für den Kontakt mit einem Abschnitt des Sicherheitsgurtes vorgesehen ist, der zwischen der Rolle (11) und der für die Erstreckung über die Schulter und den Oberkörper vorgesehenen Länge liegt, und wobei der Abschnitt unmittelbar von der Rolle (11) zu dem Führungsteil (2) läuft, was gleichzeitig eine Höheneinstellbarkeit des Gurtes an dem Führungsteil ermöglicht, wobei die Führungsfläche (20) über den überwiegenden Teil ihrer Länge entlang ihrer Längserstreckung derart positiv gekrümmt ist, daß eine konvexe Oberfläche längs ihrer Länge gebildet ist, wobei das Führungsteil eine im wesentlichen in Längsrichtung verlaufende Ausdehnung besitzt, welche einen spitzen Winkel bezüglich der horizontalen Ebene bildet, wobei der Winkel vorzugsweise gleich oder weniger als 45° (α ≦ 45°) beträgt, wobei die Rolle (11) im wesentlichen horizontal montiert ist,
gekennzeichnet durch die Kombination, daß die Rolle (11) sich mit ihrer Rollenachse in Längsrichtung des Fahrzeugs erstreckt und daß die hohe Befestigungsstelle (24) in Längsrichtung des Fahrzeugs gesehen vor der unteren Befestigungsstelle (23) liegt.

2. Höhenverstellanordnung nach Anspruch 1, dadurch gekennzeichnet, daß die Längskrümmung im wesentlichen einer Linie entsprechend eines Krümmungsradius folgt, der weniger als 3000 mm, vorzugsweise in dem Bereich von 1000-400 mm und am bevorzugtesten 600 mm +-10% beträgt, wobei dieser Krümmungsradius in passender Weise dem Schnittpunkt zwischen zwei Winkelhalbierenden der Sitzgurtwinkel bezüglich extremer Stellungen auf der Außenfläche (20) gegenüber liegt.

3. Höhenverstellanordnung nach Anspruch 1, dadurch gekennzeichnet, daß die Entfernung zwischen der Mittelachse (12) der Rolle (11) und dem nächsten Punkt auf der Außenfläche (20) wenigstens 150 mm, jedoch vorzugsweise 200 mm und am meisten bevorzugt 250 mm übersteigt.

4. Höhenverstellanordnung nach Anspruch 1, dadurch gekennzeichnet, daß die Außenfläche (20) eine im wesentlichen in Längsrichtung verlaufende Ausdehnung besitzt, die 150 mm, jedoch vorzugsweise 200 mm übersteigt.

5. Höhenverstellanordnung nach Anspruch 2, dadurch gekennzeichnet, daß die Ausdehnung des Teils (2) der Art bemessen ist, daß der Sicherheitsgurt beim Abwickeln von der Rolle (11) maximal 30° zwischen den beiden Endstellungen des Teils (2), jedoch vorzugsweise 20° schwingend hängbar ist.

6. Höhenverstellanordnung nach Anspruch 1, dadurch gekennzeichnet, daß ein Spalt (26) zwischen dem Führungsteil (2) und einem Blechabschnitt (7) mittels Abstandsstücke (9) gewünschter Dicke, die eine Spaltbreite vorzugsweise zwischen 1,5 und 2,5 mm liefern, ausgebildet ist.

## Revendications

1. Dispositif d'ajustement en hauteur pour ceintures de sécurité dans des véhicules, principalement pour des ceintures de sécurité destinées aux passagers des sièges arrière, dans lequel la ceinture de sécurité (10) et du type rétractable à enrouleur et l'enrouleur (11) est fixé à la caisse (3) du véhicule, ledit dispositif d'ajustement en hauteur (2) comprenant un élément de guidage longitudinal (2) qui s'étend entre un point de montage bas (23) et un point de montage haut (24), et est fixé à la caisse à la hauteur des épaules du passager, la longueur dudit élément de guidage étant considérablement supérieure à la largeur de ladite ceinture de sécurité, et ledit élément (2) présentant au moins partiellement une surface de guidage (20) qui présente une courbure continue dans sa dimension longitudinale et est destinée à entrer en contact avec une partie de la ceinture de sécurité qui ce trouve entre ledit enrouleur (11) et la longueur destinée à passer sur l'épaule et sur la poitrine, laquelle partie s'étend directement de l'enrouleur (11) audit élément de guidage (2) qui permet en même temps l'ajustement en hauteur de la courroie sur l'élément de guidage, ladite surface de guidage (20) étant incurvée avec une courbure positive sur la majeure partie de sa longueur le long de sa dimension longitudinale, de sorte qu'une surface convexe est formée sur sa longueur, ledit élément de guidage ayant une dimension sensiblement longitudinale qui forme un angle aigu avec le plan horizontal, ledit angle étant de préférence égal ou inférieur à 45° (α ≦ 45°), ledit enrouleur (11) étant monté sensiblement horizontalement,
caractérisé par la combinaison suivante : ledit enrouleur (11) présente son axe d'enrouleur dans la direction longitudinale du véhicule ; et ledit point de montage haut (24) est positionné en avant du point de montage bas (23), considéré dans la direction longitudinale du véhicule.

2. Dispositif d'ajustement en hauteur selon la revendication 1, caractérisé en ce que ladite courbure longitudinale suit sensiblement une ligne correspondant à un rayon de courbure, qui est de moins de 3 000 mm, de préférence dans l'intervalle de 1000 à 400 mm et de façon encore plus préférée, de 600 mm ± 10 %, lequel dernier rayon de courbure est avantageusement sous-tendu par le point d'intersection entre deux bissectrices des angles de la ceinture de sécurité dans les positions extrêmes respectives sur ladite surface extérieure (20).

3. Dispositif d'ajustement en hauteur selon la revendication 1, caractérisé en ce que la distance entre l'axe central (12) de l'enrouleur (11) et le point le plus proche sur ladite surface extérieure (20) est au moins supérieure à 150 mm, bien qu'elle soit de préférence supérieure à 200 mm et, de façon encore plus préférée, supérieure à 250 mm.

4. Dispositif d'ajustement en hauteur selon la revendication 1, caractérisé en ce que ladite surface extérieure (20) a une dimension sensiblement longitudinale qui est supérieure à 150 mm bien qu'elle soit de préférence supérieure à 200 mm.

5. Dispositif d'ajustement en hauteur selon la revendication 2, caractérisé en ce que l'extension de l'élément (2) soit telle que la ceinture de sécurité, lorsqu'elle se déroule du tambour (11) puisse osciller sur un maximum de 30° entre les deux positions extrêmes sur ledit élément (2), bien que ce maximum soit de préférence de 20°.

6. Dispositif d'ajustement en hauteur selon la revendication 1, caractérisé en ce qu'un espace libre (26) entre ledit guide (2) et une section de tôle (7) est établi au moyen d'entretoises (9) d'une épaisseur désirée qui ménagent une largeur d'intervalle qui est de préférence d'entre 1,5 et 2,5 mm.
